# FASCICULE DE BREVET EUROPEEN

(11) **EP 3 079 988 B1**
(45) Date de publication et mention de la délivrance du brevet: **13.12.2017**
(21) Numéro de dépôt: 14812483.7
(22) Date de dépôt: 15.12.2014
(51) Int. Cl.: B64G 1/44, B64G 1/22, B64G 1/50, B64G 1/66, F28D 15/00, F28D 15/02, F28F 1/00, F28D 21/00

(54) **RADIATEUR DÉPLOYABLE POUR SATELLITE STABILISÉ TROIS AXES**
ENTFALTBARER RADIATOR FÜR EINEN AUF DREI ACHSEN STABILISIERTEN SATELLITEN
RADIATOR DEPLOYABLE FOR A SATELLITE STABILIZED ON THREE AXES

(30) Priorité: 13.12.2013 FR 1362606
(43) Date de publication de la demande: 19.10.2016
(73) Titulaire: Airbus Defence and Space SAS, 31402 Toulouse Cedex 4 (FR); Thales, 92200 Neuilly Sur Seine (FR); Centre National d'Etudes Spatiales (CNES), 75001 Paris (FR)
(72) Inventeur: LEMAIRE, Jérôme, F-31290 Trebons sur la Grasse (FR); MIEGEVILLE, Yann, F-06210 Mandelieu La Napoule (FR)
(74) Mandataire: Ipside
(86) Numéro de dépôt international: PCT/EP2014/077746
(87) Numéro de publication internationale: WO 2015/086851

(56) Documents cités:
- EP-A1- 0 945 343
- US-A- 4 947 825
- US-A- 5 386 953
- US-A- 6 075 200
- US-A- 6 102 339
- US-B1- 6 284 966

## Description

La présente invention relève du domaine des architectures de satellites stabilisés sur 3 axes, notamment de satellites de télécommunications destinés à être placés en orbite géostationnaire.

### Préambule et art antérieur

Pour faire face au volume toujours croissant de télécommunications dans le monde, les satellites de télécommunications sont de plus en plus puissants. Leur charge utile électronique (tubes à ondes progressives notamment) dégage de ce fait une puissance thermique de plus en plus importante, d'environ 60% de la puissance électrique du satellite, c'est à dire couramment de l'ordre de plusieurs kW, et le refroidissement de cette charge utile devient de plus en plus difficile à réaliser.

De façon usuelle, ce refroidissement est réalisé en utilisant les faces dites Nord et Sud du satellite, c'est à dire les faces sensiblement perpendiculaires à l'équateur terrestre lorsque le satellite est mis à poste, comme radiateurs, en y plaçant des boucles fluides ou des caloducs qui évacuent la chaleur générée par les équipements dissipatifs du satellite.

Les dimensions de ces faces deviennent alors une limite à la capacité de refroidissement du satellite. Le document US 5386953 A divulgue les caractéristiques du préambule de la revendication 1. Diverses techniques ont été envisagées pour résoudre ce problème puissance / refroidissement pour des satellites de forte puissance, mais leur poids ou leur complexité sont des facteurs limitant de leur utilisation effective sur satellites.

La présente invention a donc pour but de remédier à tout ou partie de ces inconvénients.

### Exposé de l'invention

L'invention vise, à cet effet, sous un premier aspect, un générateur photovoltaïque déployable pour satellite de type stabilisé trois axes, ledit générateur photovoltaïque comportant un ensemble de panneaux articulés les uns par rapport aux autres, et un bras d'attache à la structure d'un corps de satellite, permettant une rotation libre du générateur photovoltaïque vis-à-vis du corps du satellite pour suivre la course du soleil lors de l'orbite du satellite,

ledit générateur photovoltaïque pouvant adopter une première position, dite position de lancement, dans laquelle les panneaux sont repliés les uns sur les autres, une seconde position, dite totalement déployée, dans laquelle les panneaux sont totalement déployés, au moins une partie des panneaux étant des panneaux photovoltaïques présentant une face de capteurs photovoltaïques destinée à être orientée vers le rayonnement solaire,

le générateur photovoltaïque étant tel qu'au moins un panneau est constitué d'un radiateur thermique, sa face radiative étant orientée de façon opposée à la face des panneaux photovoltaïques portant les capteurs photovoltaïques, lorsque le générateur photovoltaïque est en position déployée, cette face radiative étant dite face « ombre », et la face opposée du panneau formant radiateur étant dite face « soleil ».

De cette manière, le radiateur reste orienté à l'ombre aussi longtemps que les capteurs photovoltaïques sont exposés au soleil, c'est à dire la grande majorité du temps. Le radiateur est alors pleinement efficace.

De plus, le déploiement de ce radiateur se fait avec celui des autres panneaux du générateur déployable, ce qui représente une simplification de mise en oeuvre. Enfin, les dispositifs de fixation du radiateur à la structure du satellite lors de la phase de lancement sont alors les mêmes que ceux du générateur déployable, ce qui se traduit par une économie de moyens.

On obtient donc un radiateur de capacité de réjection maximisée, tout en diminuant le plus possible l'impact de sa mise en place sur l'architecture du satellite.

On connaît effectivement déjà des radiateurs déployables mis en oeuvre sur des satellites, ces dispositifs permettant d'augmenter la surface radiative des faces Nord et Sud. Il s"agit le plus souvent de panneaux articulés autour d'un axe d'attache au corps du satellite, ou d'un bras de déploiement.

De tels radiateurs déployables constituent une complexité mécanique supplémentaire à prendre en compte dans la conception du satellite, ils nécessitent en effet une structure de déploiement dédiée, et un système de fixation propre, ce qui accroit la complexité globale du satellite.

Par ailleurs, les radiateurs déployables existant sur d'autres satellites sont d'orientation fixe et sont donc à intervalles réguliers exposés au flux solaire, ce qui nuit à leur efficacité. Ces solutions exigent en outre de disposer de la place nécessaire dans l'environnement proche du satellite, généralement entre le générateur solaire et le corps du satellite. Ceci pose des problèmes à la fois pour le stockage des panneaux photovoltaïques et du radiateur déployable proprement dit avant le lancement, et, une fois en orbite, pour gérer le volume occupé par les radiateurs déployables au sein d'un espace également utilisé par les générateurs solaires ou les antennes ou le système propulsif.

Il est à noter que les panneaux comportent éventuellement également une position dite position semi-déployée, dans laquelle le ou les panneaux de l'extrémité du générateur sont déployés.

Selon un mode de réalisation particulier, le panneau le plus proche du bras de support est un panneau formant radiateur thermique, chaque panneau étant monofonction, c'est à dire que les fonctions de radiateur thermique et de générateur solaire sont exclusives l'une de l'autre pour chaque panneau du générateur.

Cette disposition permet de réduire la longueur des tubes de circulation de fluide de refroidissement entre le satellite et le radiateur. Elle permet par ailleurs d'éloigner les capteurs photovoltaïques des éjecteurs des tuyères de contrôle d'attitude du satellite, ce qui réduit la dégradation des capteurs par les jets desdites tuyères. Le rôle de ce radiateur thermique est d'assurer une surface radiative supplémentaire par rapport aux murs Nord-Sud. Ce radiateur thermique est au plus près du bras de support pour permettre une connexion fluidique courte et simple avec les murs Nord-Sud.

Selon une architecture particulière, le générateur déployable comporte un ensemble matriciel de panneaux photovoltaïques rectangulaires disposés en lignes et un panneau formant radiateur aligné avec la colonne centrale de panneaux photovoltaïques. Cette mise en oeuvre permet un déploiement simple du générateur déployable. Cet ensemble matriciel peut consister en une seule ligne, constituée par exemple de 4 à 5 panneaux, ou en plusieurs lignes, par exemple 3 lignes, chaque lignes étant constituée par exemple de 3 à 4 panneaux

Selon un mode de réalisation particulier, le générateur comporte une zone isolante entre le panneau radiateur et les panneaux solaires, de manière à réduire le transfert de chaleur du panneau radiateur vers les panneaux solaires.

Selon un mode de réalisation particulier offrant une bonne efficacité du radiateur, au moins un panneau formant radiateur est parcouru de tubes d'une boucle fluide ou d'un caloduc, sa face ombre étant recouverte d'un dispositif radiatif, et sa face soleil étant recouverte d'un isolant multicouche.

L'invention vise, sous un second aspect, un satellite, de type stabilisé sur trois axes, ledit satellite comportant au moins un ensemble déployable de panneaux photovoltaïques tel qu'exposé, lesdits panneaux photovoltaïques étant stockés en position repliée lors du lancement, puis déployés une fois le satellite mis à poste, le panneau de radiateur étant disposé au plus près du corps du satellite.

Dans un mode de réalisation particulier, le satellite comporte une liaison fluidique entre le panneau de radiateur du générateur photovoltaïque et le corps du satellite.

Dans un mode de réalisation plus particulier, le satellite comporte un joint tournant disposé entre le corps du satellite et l'ensemble de panneaux, disposé au niveau du bras de support du générateur photovoltaïque déployable, ledit joint tournant ayant son axe de rotation confondu avec l'axe de rotation du bras, et comportant des moyens de passage d'au moins un fluide et des moyens de transfert de courant électrique. Cette disposition permet le passage de fluides de refroidissement entre le satellite et le radiateur, ainsi que le transfert d'énergie électrique, tout en assurant une libre rotation du bras portant le générateur photovoltaïque, de manière à permettre le suivi de la position du Soleil lors de l'orbite du satellite.

Dans un premier mode de réalisation, le joint tournant comporte deux dispositifs concentriques. Dans ce cas, adapté au cas de refroidissement par boucle fluide, la circulation des fluides se fait en partie centrale du joint tournant. On obtient alors un dispositif permettant un mouvement de rotation permanent du générateur déployable, en suivant le Soleil.

Dans un mode de réalisation particulier de mise en oeuvre simple, les moyens de passage du courant électrique sont constitués d'une piste conductrice en forme de disque, parcourue par un balai également conducteur.

Alternativement, le passage du fluide caloporteur se fait au travers d'un enroulement de flexible adapté au transport de fluide entre le corps du satellite et le panneau radiateur, cet enroulement de flexible étant solidarisé, à une de ses extrémités, à un circuit d'évacuation de chaleur du corps du satellite, et, en son autre extrémité, au panneau radiateur. L'enroulement de flexible comporte par exemple deux tubes de passage de fluide, si le satellite est équipé d'un refroidisseur à boucle fluide.

Cette mise en oeuvre est plus simple de réalisation qu'un joint tournant adapté au passage de fluides. Ici, l'enroulement de flexible, par exemple sous forme hélicoïdale, permet de maintenir la circulation des fluides de refroidissement pendant le mouvement de rotation du générateur déployable, jusqu'à une valeur angulaire prédéterminée, par exemple +180 ou +360°. Puis, un mouvement de rotation en sens inverse du générateur déployable est réalisé, jusqu'à -180° ou -360°, pour ramener l'enroulement de flexible en position inverse.

Dans ce cas, pour simplifier le mécanisme d'entrainement du générateur solaire, dans un mode de réalisation particulier (utilisant un flexible et pas de joint tournant pour le transport du fluide) le passage du courant est réalisé par au moins un toron flexible et non par des pistes sur un disque tournant.

L'invention vise sous un autre aspect un procédé de pilotage d'un générateur photovoltaïque de satellite tel qu'exposé, le procédé comportant une étape dans laquelle, lors de la rotation du générateur photovoltaïque autour de son axe relativement au corps du satellite, l'enroulement de flexible se déploie progressivement mais permet de maintenir le transport de fluides entre le corps du satellite et le générateur photovoltaïque, et une étape dans laquelle, à intervalle réguliers, par exemple toutes les 24 heures à une heure où la zone de la terre à laquelle le satellite fait face est en période nocturne, le générateur photovoltaïque effectue une rotation rapide en sens inverse de son sens de suivi du soleil, de manière à ramener l'enroulement de flexible en position neutre, ou en position de déploiement maximum dans l'autre sens.

### Présentation des figures

Les caractéristiques et avantages de l'invention seront mieux appréciés grâce à la description qui suit, description qui expose les caractéristiques de l'invention au travers d'un exemple non limitatif d'application.

La description s'appuie sur les figures annexées qui représentent :
Figure 1 : une représentation schématique d'un satellite stabilisé trois axes en orbite autour de la Terre,
Figure 2 : une représentation schématique en perspective d'un satellite stabilisé sur 3 axes, comportant un générateur déployable tel qu'exposé, en configuration déployée,
Figure 3 : une représentation schématique d'un satellite similaire, avec le générateur déployable stocké,
Figure 4 : une représentation du satellite de la figure 2, le générateur déployable étant en cours de déploiement.

### Description détaillée d'un mode de réalisation de l'invention

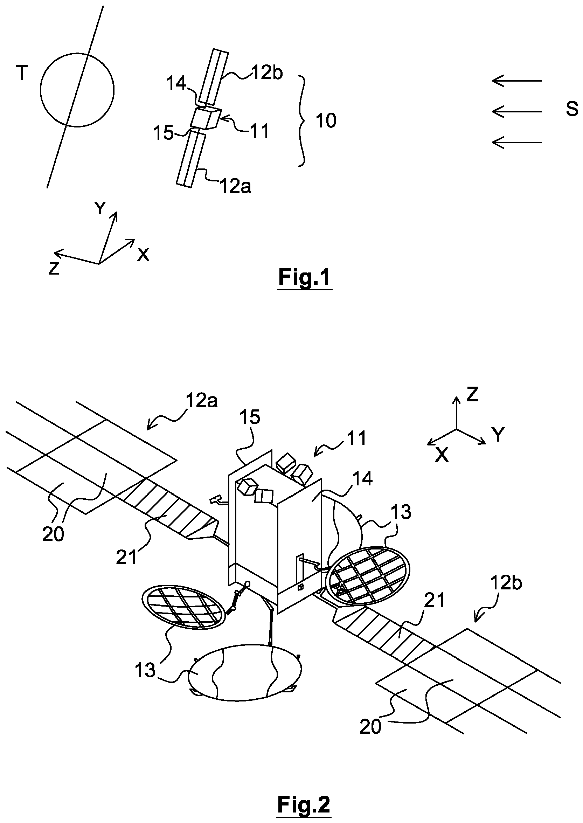

La présente invention est destinée à être utilisée sur un satellite du type destiné à être mis à poste en et stabilisé sur 3 axes. Comme on le voit sur les figures 1 et 2, dans un exemple purement illustratif et nullement limitatif, on suppose ici qu'il s'agit d'un satellite 10 comportant un corps **11** de forme sensiblement parallélépipédique, dont les centres des faces définissent des axes X, Y, Z. Un tel satellite stabilisé sur trois axes peut être typiquement un satellite de télécommunications placé en orbite géostationnaire.

L'invention cependant n'est pas limitée à l'orbite géostationnaire. Elle est applicable à toute orbite et tout satellite avec un générateur solaire orienté vers le soleil. C'est en particulier le cas quand la position du générateur solaire (GS par abréviation) vers le soleil est assurée par une loi de pilotage en lacet ("yaw steering" en anglais), éventuellement combiné avec une rotation du GS par un mécanisme.

Lorsque le satellite **10** est placé à poste sur son orbite, ses faces sont orientées de telle sorte qu'un axe Y dit Nord-Sud est parallèle à l'axe de rotation de la Terre, un axe X dit Est-Ouest est parallèle à l'axe de déplacement du satellite sur son orbite, et un axe Z dit Terre-antiTerre est perpendiculaire aux deux autres.

Un satellite de télécom en orbite géostationnaire 10 présente toujours la même face vers la Terre lors de son orbite, et ses faces Nord **14** et Sud **15,** sensiblement parallèles à l'équateur terrestre lorsque le satellite 10 est mis à poste, sont les moins illuminées par le soleil S, lors de l'orbite du satellite autour de la Terre. Dans le présent exemple, le satellite 10 considéré comporte deux générateurs photovoltaïques **12a, 12b,** attachés à ces faces Nord 14 et Sud 15. Chaque générateur photovoltaïque 12a, 12b est attaché au corps 11 du satellite 10 par un bras **18a, 18b** (communément appelé "Yoke" en anglais). De la sorte, ces générateurs photovoltaïques 12a, 12b restent en permanence hors de l'ombre générée par le satellite 10 lui-même. Un mécanisme permet à la fois l'orientation du générateur photovoltaïque vers le Soleil, et le passage de courant du générateur photovoltaïque vers le satellite 10

Les faces Nord 14 et Sud 15 comportent également usuellement des zones formant radiateurs (perpendiculaires à l'axe Nord-Sud et non illustrés sur la figure), tirant ainsi parti de leur faible exposition au Soleil.

Le satellite 10 comporte par ailleurs un ensemble d'antennes d'émission **13** (voir figure 2), attachées principalement aux faces Est **16** et Ouest **17,** et faisant ainsi toujours face à la Terre lors de l'orbite du satellite 10.

Cette architecture générale du satellite 10 est bien connue de l'homme du métier, et sort en tant que telle du cadre de l'invention. Elle n'est donc pas décrite plus avant ici.

Pendant que le satellite garde toujours la même face orientée vers la Terre, les générateurs photovoltaïques 12a, 12b restent, autant que possible, toujours orientés vers le Soleil S. Les générateurs photovoltaïques 12a, 12b effectuent donc une rotation autour de l'axe Nord-Sud par rapport au satellite en 24 heures pour suivre le Soleil.

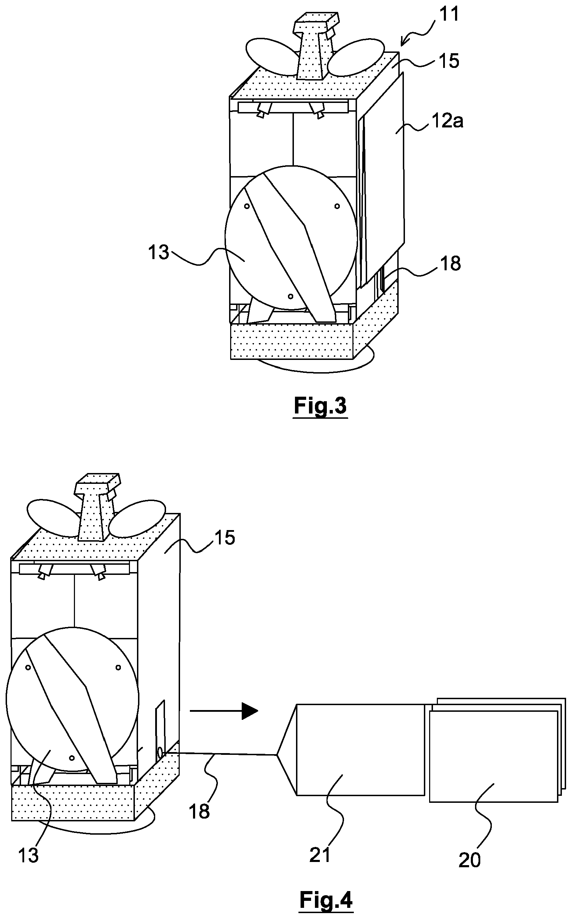

Ces générateurs photovoltaïques 12a, 12b comprennent, dans le présent exemple de mise en oeuvre, des assemblages déployables formés d'un ensemble articulé de panneaux solaires **20** sensiblement plans et empilables. Cette configuration est notamment illustrée figure 2. Ces panneaux solaires 20 sont ici des panneaux rectangulaires, dont la surface unitaire est généralement voisine ou inférieure à la surface d'une face latérale Nord 14 ou Sud 15 du satellite 10. Lors du lancement, les panneaux solaires 20 formant les générateurs photovoltaïques 12a, 12b sont repliés les uns sur les autres, de façon à former un ensemble compact attaché sur une paroi du corps du satellite 10 (voir figure 3). Après la mise à poste du satellite 10 en orbite géostationnaire, les panneaux solaires 20 sont déployés, selon une cinématique connue en soi, pour offrir leur surface maximale au rayonnement solaire. Le mécanisme et de le mode de déploiement des panneaux solaires, entre leur configuration repliée, et leur configuration déployée, sont supposés connus en soi.

Les panneaux solaires 20, une fois déployés, forment en orbite une structure de pavage rectangulaire sensiblement plan, comportant par exemple trois colonnes (selon l'axe Nord-Sud Y) et cinq rangées (selon l'axe Est-Ouest X). L'assemblage de panneaux solaires 20 pourrait naturellement, en variante, comporter un nombre quelconque de colonnes et de rangées, selon les besoins liés à la mission du satellite 10.

Chaque panneau solaire 20 comporte une face couverte de cellules photovoltaïques, cette face étant destinée à être tournée vers le rayonnement solaire.

Dans le mode de réalisation donné ici à titre d'exemple non limitatif et notamment illustré figure 2, chaque générateur photovoltaïque 12a, 12b comporte, entre l'assemblage des panneaux solaires 20 proprement dit et le corps 11 du satellite 10, un panneau radiateur **21.** Dans le présent exemple de réalisation, le panneau radiateur 21 est relié par un seul de ses côtés à l'assemblage matriciel de panneaux solaires 20. Plus précisément, dans la configuration illustrée par la figure 2, le panneau radiateur 21 est relié à un assemblage de trois colonnes de cinq rangées de panneaux solaires 20 par son bord le plus éloigné du corps 11 du satellite 10. Ce panneau radiateur 21 est aligné avec la colonne centrale de panneaux solaires 20. Il comporte des moyens de déploiement analogues à ceux des panneaux solaires, et sortant du cadre de la présente invention.

Le panneau radiateur 21 est attaché au corps 11 du satellite par l'intermédiaire du bras 18. Le panneau radiateur 21 comporte également des moyens de transmettre les efforts mécaniques subis par le générateur photovoltaïque 12 au bras 18, de manière à ce que ceux-ci soient repris par la structure du satellite 10.

Dans le présent mode de réalisation, le panneau radiateur 21 est relié par son bord extérieur à l'assemblage de panneaux solaires 20. En fait il est relié ici au bord intérieur du panneau solaire disposé dans la colonne centrale et la rangée la plus proche du corps du satellite.

Il peut également, en variante, être relié à cet assemblage de panneaux solaires par un autre bras de support mécanique, aligné avec le bras 18 (configuration non illustrée sur les figures).

Comme on le voit sur la figure 3, lorsque le satellite 10 est en en position de lancement, les panneaux 20, 21 formant un générateur photovoltaïque 12a, 12b sont repliés les uns sur les autres et viennent se placer devant une face (par exemple Nord ou Sud) du satellite. Le panneau radiateur 21 est alors empilé avec les autres panneaux. La configuration du satellite 10 en position de lancement est inchangée par rapport à une configuration de satellite classique (dénué de générateurs photovoltaïques tels qu'exposés), avec cependant des empilements de panneaux plus épais ici de l'épaisseur du panneau radiateur 21.

Dans cette configuration de lancement, chaque bras 18a, 18b de support d'un générateur 12a, 12b est rétracté à l'intérieur du corps 11 du satellite 10.

La figure 4 illustre alors une configuration d'un générateur photovoltaïque en cours de déploiement, lors de la mise à poste du satellite 10, une fois celui-ci placé en orbite géostationnaire. Lors de ce déploiement, chaque bras 18a, 18b vient sortir de son logement dans le corps du satellite. Puis les panneaux 20, 21 sont déployés selon une cinématique classique pour adapter leur position de surface maximum face au rayonnement solaire. Dans le présent exemple, le premier panneau 21 est le panneau radiateur, chaque rangée suivante de panneaux portant trois panneaux solaires 20.

Dans le présent exemple de réalisation, nullement limitatif, chaque panneau radiateur 21 comporte un parcours d'un ou plusieurs tubes de circulation de fluide. Il peut s'agir de tubes de caloduc et / ou de boucle fluide. Ce ou ces tubes réalisent l'échange thermique entre le fluide circulant à l'intérieur desdits tubes, et le milieu extérieur, dans une direction non exposée au rayonnement solaire.

Chaque panneau radiateur 21 comporte une face isolante thermiquement, orientée vers le rayonnement solaire, et donc coplanaire à la face des panneaux solaires 20 portant les cellules photovoltaïques. Cette face isolante est par exemple, mais non limitativement, couverte d'une isolation multicouches MLI (Multi-Layer Insulation), de type connu en soi. Cette face isolante peut également comporter une couche de tout autre matériau très isolant thermiquement. Le but de cette isolation est de restreindre au maximum les entrées de rayonnements sur la face « Soleil ».

La face opposée à la face isolante thermiquement, c'est à dire la face orientée dos au soleil, est, dans le présent exemple de réalisation, couverte d'un dispositif radiatif.

Ce dispositif radiatif est ici, mais non limitativement, constitué de peinture blanche. Il peut également s'agir d'OSR (Optical Solar Reflector) ou de tout autre moyen connu en soi à cette fin.

Comme on l'a dit plus haut, le générateur photovoltaïque 12a, 12b reste presque en permanence orienté vers le soleil, alors que la corps du satellite reste tourné vers la terre. De ce fait, le générateur photovoltaïque est en rotation autour d'un axe de rotation matérialisé par le bras 18a, 18b vis à vis du corps du satellite 10.

Le transport de fluide caloporteur entre le corps du satellite 10 et le panneau radiateur 21 du générateur photovoltaïque 12a, 12b doit donc tenir compte de ce mouvement de rotation.

Dans une première mise en oeuvre, le générateur photovoltaïque 12a, 12b comporte un joint tournant disposé entre la structure du satellite 10 et l'ensemble de panneaux 20, 21, par exemple au niveau du bras de support du générateur photovoltaïque déployable, ledit joint tournant ayant son axe de rotation confondu avec l'axe de rotation du bras. Ce joint tournant comporte des moyens de passage d'au moins un fluide et des moyens de transfert de courant électrique.

Dans un mode de réalisation, le joint tournant comporte en partie centrale un ou deux dispositifs concentriques de passage de fluide (selon que le dispositif utilise un caloduc ou une boucle fluide). De tels joints tournant pour le passage d'un fluide sont déjà connus en soi et sortent, en tant que tels, du cadre de la présent invention. Pour de tels exemples de joints tournants utilisés dans le spatial on peut se reporter par exemple au document AIAA Paper 86-1298 Heizer, Goo, Rhodes et al "A steerable radiator for spacecraft application", 4th joint thermophysics and heat transfert conference.

Les moyens de passage du courant électrique sont, par exemple, constitués d'une piste conductrice en forme de disque, parcourue par un balai également conducteur. Le parcours du balai sur la piste assure le passage du courant indépendamment de la position angulaire respective de ces moyens.

Dans une seconde mise en oeuvre, le générateur photovoltaïque 12a, 12b comporte un enroulement de flexible (bobinage sans moyeu) adapté au passage de fluide entre le corps du satellite et le panneau radiateur 21. Cet enroulement de flexible est solidarisé, à une de ses extrémités, au circuit d'évacuation de chaleur du corps du satellite, et, en son autre extrémité, au panneau radiateur 21. Ici encore, l'enroulement de flexible peut comporter un ou deux tubes de passage de fluide, selon que le satellite est équipé d'un refroidisseur à caloduc ou à boucle fluide..

Un tel enroulement « en queue de cochon », présente au repos une longueur faible, des spires de tube venant se placer au contact les unes des autres, et présente en position déployée une longueur arbitrairement grande, déterminée par le nombre de spires et leur diamètre. De tels dispositifs sont déjà connus en soi et sortent, en tant que tels, du cadre de la présent invention

De la sorte, lors de la rotation du générateur photovoltaïque autour de son axe relativement au corps du satellite, l'enroulement de flexible se déploie progressivement mais permet de maintenir le transport de fluides (et éventuellement d'électricité) entre le corps du satellite et le générateur.

A intervalle réguliers, par exemple toutes les 24 heures à une heure où la zone de la terre à laquelle le satellite fait face est en période nocturne, le générateur photovoltaïque effectue une rotation rapide (par exemple en quelques dizaines de minutes) en sens inverse de son sens de suivi du soleil, de manière à ramener l'enroulement de flexible en position neutre, ou en position de déploiement maximum dans l'autre sens.

Il est ainsi possible de prévoir un débattement maximum du générateur autour de son axe de rotation de +- 190°, et de commander toutes les 24 heures, lorsque le générateur est à moins de 10° du déroulement maximum de l'enroulement de flexible, une rotation rapide vers la position inverse.

Les moyens de passage du courant électrique sont, par exemple, constitués d'une piste conductrice en forme de disque, parcourue par un balai également conducteur. Le parcours du balai sur la piste assure le passage du courant indépendamment de la position angulaire respective de ces moyens. Alternativement, le passage du courant peut également se faire à travers des torons flexibles à la manière de l'enroulement du tuyau de fluide caloporteur, pour viser à simplifier le besoin du mécanisme de rotation.

Dans la mise en oeuvre qui a été décrite ici, l'un seulement ou les deux générateurs déployables comportent un panneau radiateur 21.

En variante, l'un des générateur photovoltaïques 12a, 12b comporte deux panneaux radiateurs 21 alignés et connexes, disposés selon la colonne centrale de panneaux 20 du générateur photovoltaïque 12a, 12b. Il est clair que, dans une autre variante de réalisation, un nombre quelconque de panneaux formant le générateur déployable 12a, 12b peut être constitué de panneaux radiateurs 21, selon le cahier des charges de la mission du satellite 10, et, notamment, selon la puissance thermique qui doit être dissipée.

De même, un seul des deux générateurs photovoltaïques déployables peut comporter un panneau radiateur 21. Dans ce cas, l'autre générateur photovoltaïque est modifié en dimensions, de manière à assurer l'équilibrage de couples du satellite.

Dans une autre variante, au moins un panneau formant radiateur 21 est accolé à la face arrière (face opposée aux capteurs photovoltaïques) de l'un des panneaux solaires 20 du générateur photovoltaïque 12a, 12b.

## Revendications

1. Générateur photovoltaïque (12a, 12b) déployable pour satellite (10) de type stabilisé trois axes, ledit générateur photovoltaïque (12a, 12b) comportant un ensemble de panneaux (20, 21) articulés les uns par rapport aux autres, et un bras d'attache (18) à la structure d'un corps (11) de satellite (10), ledit générateur photovoltaïque (12a, 12b) pouvant adopter une première position, dite position de lancement, dans laquelle les panneaux (20, 21) sont repliés les uns sur les autres, et une seconde position, dite position déployée, dans laquelle les panneaux (20, 21) sont totalement déployés, au moins une partie des panneaux étant des panneaux solaires (20) présentant une face de capteurs photovoltaïques destinée à être orientée vers le rayonnement solaire, au moins un panneau (21) est constitué d'un radiateur thermique, sa face radiative étant orientée de façon opposée à la face des panneaux photovoltaïques portant les capteurs photovoltaïques, lorsque le générateur photovoltaïque (12a, 12b) est en position déployée, cette face radiative étant dite face « ombre », et la face opposée du panneau formant radiateur (21) étant dite face « soleil », **caractérisé en ce que** le panneau le plus proche du bras d'attache (18) est un panneau (21) formant radiateur thermique, chaque panneau étant monofonction, c'est à dire que les fonctions de radiateur thermique et de générateur solaire sont exclusives l'une de l'autre pour chaque panneau du générateur.

2. Générateur photovoltaïque (12a, 12b) selon la revendication 1, **caractérisé en ce qu'**il comporte un ensemble matriciel de panneaux solaires (20) rectangulaires disposés en lignes, et un panneau formant radiateur (21) aligné avec la colonne centrale de panneaux photovoltaïques.

3. Générateur photovoltaïque (12a, 12b) selon l'une quelconque des revendications 1 à 2, **caractérisé en ce qu'**il comporte une zone isolante entre le panneau radiateur (21) et les panneaux solaires (20).

4. Générateur photovoltaïque (12a, 12b) selon l'une quelconque des revendications 1 à 3, **caractérisé en ce qu'**au moins un panneau formant radiateur (21) est parcouru de tubes d'une boucle fluide ou d'un caloduc, sa face ombre étant recouverte d'un dispositif radiatif, et sa face soleil étant recouverte d'un isolant multicouche.

5. Satellite (10), de type stabilisé sur trois axes, **caractérisé en ce que** ledit satellite comporte au moins un générateur photovoltaïque (12a, 12b) déployable selon l'une quelconque des revendications 1 à 4, lesdits panneaux photovoltaïques étant stockés en position repliée lors du lancement, puis déployés une fois le satellite mis à poste, le panneau de radiateur (21) étant disposé au plus près du corps (11) du satellite (10).

6. Satellite selon la revendication 5, **caractérisé en ce qu'**il comporte une liaison fluidique entre le panneau de radiateur (21) du générateur photovoltaïque (12a, 12b) et le corps (11) du satellite (10).

7. Satellite selon la revendication 6, **caractérisé en ce qu'**il comporte un joint tournant disposé entre le corps (11) du satellite (10) et l'ensemble de panneaux (20, 21), disposé au niveau du bras (18) d'attache du générateur photovoltaïque (12a, 12b) déployable, ledit joint tournant ayant son axe de rotation confondu avec l'axe de rotation du bras, et comportant des moyens de passage d'au moins un fluide et des moyens de transfert de courant électrique.

8. Satellite (10) selon la revendication 7, **caractérisé en ce que**, dans le cas où le générateur photovoltaïque comporte un panneau radiateur (21) utilisant une boucle fluide, le joint tournant comporte en partie centrale deux dispositifs concentriques de passage de fluide, orientés selon l'axe de rotation du joint tournant.

9. Satellite (10) selon la revendication 7 ou 8, **caractérisé en ce que** les moyens de passage du courant électrique sont constitués d'une piste conductrice en forme de disque, parcourue par un balai également conducteur.

10. Satellite (10) selon la revendication 6, **caractérisé en ce que** le satellite comporte un enroulement de flexible adapté au transport de fluide entre le corps du satellite et le panneau radiateur (21), cet enroulement de flexible étant solidarisé, à une de ses extrémités, à un circuit d'évacuation de chaleur du corps du satellite, et, en son autre extrémité, au panneau radiateur (21).

11. Satellite (10) selon la revendication 10, **caractérisé en ce que** les moyens de passage du courant électrique sont constitués par au moins un toron flexible.

12. Satellite (10) selon la revendication 10 ou 11, **caractérisé en ce que** l'enroulement de flexible comporte deux tubes de passage de fluide, si le satellite est équipé d'un refroidisseur à boucle fluide.

13. Procédé de pilotage d'un générateur photovoltaïque de satellite selon la revendication 12, **caractérisé en ce qu'**il comporte une étape dans laquelle, lors de la rotation du générateur photovoltaïque (12a, 12b) autour de son axe relativement au corps (11) du satellite (10), l'enroulement de flexible se déploie progressivement mais permet de maintenir le transport de fluides entre le corps du satellite (10) et le générateur photovoltaïque (12a, 12b), et une étape dans laquelle, à intervalle réguliers, par exemple toutes les 24 heures à une heure où la zone de la terre à laquelle le satellite fait face est en période nocturne, le générateur photovoltaïque (12a, 12b) effectue une rotation rapide en sens inverse de son sens de suivi du soleil, de manière à ramener l'enroulement de flexible en position neutre, ou en position de déploiement maximum dans l'autre sens.

## Patentansprüche

1. Photovoltaikgenerator (12a, 12b), der für einen auf drei Achsen stabilisierten Satelliten (10) entfaltet werden kann, wobei der Photovoltaikgenerator (12a, 12b) eine Einheit von miteinander gelenkverbundenen Platten (20, 21) und einen Haltearm (18) an der Struktur eines Körpers (11) des Satelliten (10) umfasst,
wobei der Photovoltaikgenerator (12a, 12b) eine erste Position, die als Startposition bezeichnet wird, in der die Platten (20, 21) aufeinander gefaltet sind, und eine zweite Position, die als entfaltete Position bezeichnet wird, in der die Platten (20, 21) vollständig entfaltet sind, einnehmen kann, wobei mindestens ein Teil der Platten Solarplatten (20) sind, welche eine Fläche mit Photovoltaiksensoren aufweisen, die dazu bestimmt ist, zur Sonnenstrahlung gerichtet zu werden,
wobei mindestens eine Platte (21) aus einem Wärmeradiator besteht, dessen Strahlfläche entgegengesetzt zur Fläche der Photovoltaikplatten ausgerichtet ist, welche die Photovoltaiksensoren trägt, wenn sich der Photovoltaikgenerator (12a, 12b) in der entfalteten Position befindet, wobei diese Strahlfläche als "Schattenfläche" bezeichnet wird, und die Fläche gegenüber der den Radiator (21) bildenden Fläche als "Sonnenfläche" bezeichnet wird, **dadurch gekennzeichnet, dass** die Platte, die dem Haltearm (18) am nächsten liegt, eine Platte (21) ist, die den Wärmeradiator bildet, wobei jede Platte monofunktionell ist, das heißt, dass die Funktionen des Wärmeradiators und des Solargenerators einander für jede Platte des Generators ausschließen.

2. Photovoltaikgenerator (12a, 12b) nach Anspruch 1, **dadurch gekennzeichnet, dass** dieser eine Matrixeinheit von rechteckigen Solarplatten (20), die in Zeilen angeordnet sind, und eine den Radiator (21) bildende Platte, die mit der zentralen Spalte der Photovoltaikplatten ausgerichtet ist, umfasst.

3. Photovoltaikgenerator (12a, 12b) nach einem der Ansprüche 1 bis 2, **dadurch gekennzeichnet, dass** dieser eine Isolierzone zwischen der Radiatorplatte (21) und den Solarplatten (20) umfasst.

4. Photovoltaikgenerator (12a, 12b) nach einem der Ansprüche 1 bis 3, **dadurch gekennzeichnet, dass** mindestens eine den Radiator (21) bildende Platte von Rohren einer Fluidschleife oder einer Wärmeleitung durchlaufen wird, wobei ihre Schattenfläche von einer Strahlvorrichtung bedeckt ist und ihre Sonnenfläche von einem mehrschichtigen Isoliermittel bedeckt ist.

5. Satellit (10) vom auf drei Achsen stabilisierten Typ, **dadurch gekennzeichnet, dass** der Satellit mindestens einen entfaltbaren Photovoltaikgenerator (12a, 12b) nach einem der Ansprüche 1 bis 4 umfasst, wobei die Photovoltaikplatten beim Start in zusammengefalteter Form gelagert werden, und dann entfaltet werden, sobald der Satellit in Position gebracht wird, wobei die Radiatorplatte (21) am nächsten zum Körper (11) des Satelliten (10) angeordnet ist.

6. Satellit nach Anspruch 5, **dadurch gekennzeichnet, dass** dieser eine Fluidverbindung zwischen der Platte des Radiators (21) des Photovoltaikgenerators (12a, 12b) und dem Körper (11) des Satelliten (10) umfasst.

7. Satellit nach Anspruch 6, **dadurch gekennzeichnet, dass** dieser ein sich drehendes Gelenk umfasst, das zwischen dem Körper (11) des Satelliten (10) und der Einheit der Platten (20, 21) angeordnet ist und auf der Ebene des Haltearms (18) des entfaltbaren Photovoltaikgenerators (12a, 12b) angeordnet ist, wobei sich das Gelenk um seine Drehachse dreht, die mit der Drehachse des Arms zusammenfällt, und Mittel zum Führen mindestens eines Fluids und Mittel zum Übertragen von elektrischem Strom umfasst.

8. Satellit (10) nach Anspruch 7, **dadurch gekennzeichnet, dass** in dem Fall, in dem der Photovoltaikgenerator eine Radiatorplatte (21) unter Verwendung einer Fluidschleife umfasst, das sich drehende Gelenk im zentralen Teil zwei konzentrische Vorrichtungen zum Führen von Fluid umfasst, die gemäß der Drehachse des sich drehenden Gelenks ausgerichtet sind.

9. Satellit (10) nach Anspruch 7 oder 8, **dadurch gekennzeichnet, dass** die Mittel zum Führen von elektrischem Strom aus einer Leiterbahn in Form einer Scheibe bestehen, die von einer ebenfalls leitenden Bürste durchlaufen wird.

10. Satellit (10) nach Anspruch 6, **dadurch gekennzeichnet, dass** der Satellit eine flexible Wicklung umfasst, die für den Transport von Fluid zwischen dem Körper des Satelliten und der Radiatorplatte (21) geeignet ist, wobei diese flexible Wicklung an einem ihrer Enden mit einer Wärmeabfuhrleitung des Körpers des Satelliten und an ihrem anderen Ende mit der Radiatorplatte (21) verbunden ist.

11. Satellit (10) nach Anspruch 10, **dadurch gekennzeichnet, dass** die Mittel zum Führen von elektrischem Strom aus mindestens einer flexiblen Litze bestehen.

12. Satellit (10) nach Anspruch 10 oder 11, **dadurch gekennzeichnet, dass** die flexible Wicklung zwei Rohre zum Führen von Fluid umfasst, wenn der Satellit mit einem Kühler mit Fluidschleife ausgestattet ist.

13. Verfahren zum Steuern eines Photovoltaikgenerators eines Satelliten nach Anspruch 12, **dadurch gekennzeichnet, dass** dieses umfasst: einen Schritt, in dem, bei der Drehung des Photovoltaikgenerators (12a, 12b) um seine Achse relativ zum Körper (11) des Satelliten (10), sich die flexible Wicklung progressiv entfaltet, jedoch ermöglicht, den Transport von Fluiden zwischen dem Körper des Satelliten (10) und dem Photovoltaikgenerator (12a, 12b) aufrechtzuerhalten, und einen Schritt, in dem, in regelmäßigen Intervallen, beispielsweise alle 24 Stunden bis zu einer Stunde, wo sich die Zone der Erde, welcher der Satellit zugewandt ist, in einer nächtlichen Periode befindet, der Photovoltaikgenerator (12a, 12b) eine rasche Drehung in der Richtung entgegengesetzt zu seiner Richtung der Verfolgung der Sonne macht, um die flexible Wicklung in die neutrale Position oder in die maximale Entfaltungsrichtung in der anderen Richtung zurückzuführen.

## Claims

1. Deployable photovoltaic generator (12a, 12b) for a three-axis stabilized satellite (10), said photovoltaic generator (12a, 12b) including an array of panels (20, 21) that are hinged to each other, and a yoke (18) for attaching to the structure of a body (11) of the satellite (10),
said photovoltaic generator (12a, 12b) being able to adopt a first position, called the launch position, in which the panels (20, 21) are folded on top of one another, and a second position, called the deployed position, in which the panels (20, 21) are completely deployed, at least some of the panels being solar panels (20) having a photovoltaic-collector side intended to be oriented toward solar radiation,
at least one panel (21) consisting of a thermal radiator, its radiative side being oriented oppositely to the side of the photovoltaic panels bearing the photovoltaic collectors when the photovoltaic generator (12a, 12b) is in the deployed position, this radiative side being what is called the "shady" side, and the opposite side of the panel (21) forming the radiator being what is called the "sunny" side, **characterized in that** the panel closest the attaching yoke (18) is a panel (21) forming a thermal radiator, each panel being monofunctional, i.e. the thermal-radiator and solar-generator functions are exclusive from each other in each panel of the generator.

2. Photovoltaic generator (12a, 12b) according to Claim 1, **characterized in that** it includes a matrix-array of rectangular solar panels (20) arranged in rows, and, aligned with the central column of photovoltaic panels, a panel (21) forming a radiator.

3. Photovoltaic generator (12a, 12b) according to either one of Claims 1 to 2, **characterized in that** it includes an insulating zone between the radiator panel (21) and the solar panels (20).

4. Photovoltaic generator (12a, 12b) according to any one of Claims 1 to 3, **characterized in that** at least one panel (21) forming a radiator is traversed by tubes of a fluid loop or a heat pipe, its shady side being covered with a radiative device and its sunny side being covered with an insulating multilayer.

5. Three-axis stabilized satellite (10), **characterized in that** said satellite includes at least one deployable photovoltaic generator (12a, 12b) according to any one of Claims 1 to 4, said photovoltaic panels being stowed in the folded position during launch, then deployed once the satellite has acquired its station, the radiator panel (21) being arranged as close as possible to the body (11) of the satellite (10).

6. Satellite according to Claim 5, **characterized in that** it includes a fluidic link between the radiator panel (21) of the photovoltaic generator (12a, 12b) and the body (11) of the satellite (10).

7. Satellite according to Claim 6, **characterized in that** it includes a rotary base junction arranged between the body (11) of the satellite (10) and the array of panels (20, 21) and in the yoke (18) for attaching the deployable photovoltaic generator (12a, 12b), said rotary base junction having its axis of rotation coincident with the axis of rotation of the yoke, and including means for passing at least one fluid and means for transferring electric current.

8. Satellite (10) according to Claim 7, **characterized in that**, in the case where the photovoltaic generator includes a radiator panel (21) using a fluid loop, the rotary base junction includes in a central portion two concentric devices for passing fluid, which devices are oriented along the axis of rotation of the rotary base junction.

9. Satellite (10) according to Claim 7 or 8, **characterized in that** the means for passing electric current consist of a disk-shaped conductive track swept by a brush that is also conductive.

10. Satellite (10) according to Claim 6, **characterized in that** the satellite includes a coil of flexible piping suitable for transporting fluid between the body of the satellite and the radiator panel (21), this coil of flexible piping being securely fastened, at one of its ends, to a circuit for removing heat from the body of the satellite, and, at its other end, to the radiator panel (21).

11. Satellite (10) according to Claim 10, **characterized in that** the means for passing electric current consist of at least one flexible strand.

12. Satellite (10) according to Claim 10 or 11, **characterized in that** the coil of flexible piping includes two tubes for passing fluid, if the satellite is equipped with a fluid-loop cooler.

13. Method for controlling a photovoltaic generator of a satellite according to Claim 12, **characterized in that** it includes a step in which, during the rotation of the photovoltaic generator (12a, 12b) about its axis relatively to the body (11) of the satellite (10), the coil of flexible piping is gradually deployed but allows the transport of fluids between the body of the satellite (10) and the photovoltaic generator (12a, 12b) to be maintained, and a step in which, at regular intervals, for example every 24 hours at a time at which it is nighttime in the region of the earth that the satellite is facing, the photovoltaic generator (12a, 12b) rapidly rotates in the opposite direction to its solar-tracking direction, so as to return the coil of flexible piping to a neutral position, or to a position of maximum deployment in the other direction.
